# EUROPEAN PATENT SPECIFICATION

(11) **EP 2 769 834 B1**
(45) Date of publication and mention of the grant of the patent: **06.07.2016**
(21) Application number: 13382058.9
(22) Date of filing: 26.02.2013
(51) Int. Cl.: B29C 70/86, G01N 1/00, B32B 37/00, B29C 65/00

(54) **An artificially defective cured laminate.**
Künstlich fehlerhaftes, gehärtetes Laminat
Stratifié durci défectueux artificiellement

(43) Date of publication of application: 27.08.2014
(73) Proprietor: Airbus Operations, S.L., 28906 Getafe Madrid (ES)
(72) Inventor: Arana Hidalgo, Alberto, 28906 Getafe (ES)
(74) Representative: Elzaburu Marquez, Alberto

(56) References cited:
- EP-A1- 2 363 271
- US-A- 5 142 141
- US-A1- 2010 170 746

## Description

### FIELD OF THE INVENTION

This invention relates to structures of composite materials and more in particular to test specimens for analyzing the influence of the presence of delamination defects in composite laminates.

### BACKGROUND OF THE INVENTION

Composites are made up from individual laminas bonded together at a certain temperature in a single consolidated laminate. Each layer is composed of a mixture of fibers and resin. The resin flows within and between the laminas before getting to its curing temperature.

Composite laminates are used extensively in the aeronautical industry as well as in other industries.

US 2010/0170746 A1, referred to a "structural composite material with improved acoustic and vibrational damping properties", discloses a composite material that comprises a nonwoven layer having a viscoelastic interleaf, which may be positioned mid-ply therein. It discloses the use of test specimens with a double layer of polytetrafluoroethylene (PTFE) release film placed at the midplane of the laminate between the viscoelastic interleaf and the tape ply immediately adjacent to it.

EP 2363271 A1, referred to "a layered component comprising release material between the layers", discloses a composite material that comprises plies, which may be prepregs. Film elements are provided between at least two adjacent ones of the plies. The film elements are made from a release material which inhibits adhesion between regions of the resin on opposite sides of the respective film elements, and are randomly distributed. The film elements provide delamination sites within the component. The component may be a test piece for assessing the delamination behaviour of the material. The delamination behaviour caused by the film elements may have a useful purpose, for example to control regions of a component in which delamination occurs following events such as bird strike on a fan blade of a gas turbine engine.

US 5142141 A, referred to "crack growth measurement network with primary and shunt optical fibers", discloses laminated composite materials for fabricating aircraft components in which crack measuring units can be embedded between the layers of the composite material during fabrication. When embedded, the optical output can be used to measure stresses on the components which include the detector. The measuring unit can be laid out on an internal ply of a component during fabrication, and additional plies can be built on top of the measuring unit. An embedded optical fiber can be brought to the surface for connections in such a way that does not weaken the composite component and that avoids micro-bending of the fiber.

Defects appear in composite laminates during manufacture due to material contamination, manufacturing parameter variability or other causes.

The separation of layers (also called delamination or debonding) is one of said defects.

To assess the validity of a composite part with delamination defects it is necessary to carry out structural tests on test specimens (i.e. artificially defective laminates) that include artificially simulated delamination defects.

The prior art teaches the use of test specimens with a layer of polytetrafluoroethylene (PTFE) (whether a flat layer or a folded layer) within the laminate with the shape and size of the typical delamination defects encountered during manufacturing to allow assessing the effect of such defects in the real part. A folded layer is used where a certain delamination between the layers is sought.

A drawback of this technique is that one flat layer or a folded layer is prone to deviations during the manufacturing of the test specimen due to the reduced tacking of the non-cured composite material against the non-adherent material and also to the tear produced by the roller in automated manufacturing processes that tends to move or unfold the flat layer or the folded layer.

The present invention is directed to the solution of said drawback.

### SUMMARY OF THE INVENTION

It is an object of the present invention to provide an artificially defective cured laminate suitable for being used according to claim 7 as a test specimen to simulate real delamination defects produced naturally in the manufacture of a composite part for further testing and assessment of the influence of such defects in the structural integrity of the part.

It is another object of the present invention to provide manufacturing methods of said artificially defective cured laminate.

In one aspect, these and other objects are met by an artificially defective cured laminate according to claim 1 comprising a plurality of layers of a composite material and an insert of an anti-adherent material between two of said layers for simulating a delamination defect comprising two layers of an anti-adherent material (preferably PTFE) of different size, being placed the smaller under the bigger, arranged for avoiding that the resin of the layers of a composite material can flow between the layers of the anti-adherent material during the curing stage of the laminate. A double layer (or a multi-layer) of non-adherent material guarantees a total separation between the layers of the composite material, including a certain portion of trapped air, to simulate a delamination naturally produced during the manufacture of a composite part.

Advantageously, the thickness of the layers of anti-adherent material is lesser than the thickness of the layers of composite material.

In another aspect, the above-mentioned objects are met by a manufacturing method according to claim 4 of an artificially defective cured laminate of a composite material including an inner insert of an anti-adherent material for simulating a delamination defect comprising steps of: a) laying-up a first group of layers of a composite material; b) applying local heat to the area of the last layer where said insert will be placed to increase its tacking; c) placing over the last layer of the first group, one upon another, a first and a second layer of an anti-adherent material forming the insert, being the first layer smaller than the second layer; d) laying-up a second group of layers of a composite material; e) curing the laminate resulting from step d).

Even though there is not a full guarantee of the location of the insert in the desired place in the laminate, the different size of the anti-adherent layers and the pre-heating of the subjacent laminate reduces the risk.

Other characteristics and advantages of the present invention will be clear from the following detailed description of embodiments illustrative of its object in relation to the attached figures.

### BRIEF DESCRIPTION OF THE DRAWINGS

Figures 1 is a schematic cross sectional view of an artificially defective cured laminate according to the present invention.
Figure 2 is a schematic cross section view of the components used for preparing the insert included in an artificially defective cured laminate according to an embodiment, which is not part of the claimed invention.
Figures 3a, 3b, 3c, 3d and 3e are schematic plan views of the components used for preparing the insert included in an artificially defective cured laminate according to an embodiment, which is not part of the claimed invention.
Figures 4a and 4b are plan views of the insert included in an artificially defective cured laminate according to an embodiment, which is not part of the claimed invention, in two stages of its preparation.
Figures 5a and 5b are schematic cross section views of the insert included in an artificially defective cured laminate according to an embodiment, which is not part of the claimed invention, illustrating the formation of the adhesive seal between the layers of an anti-adherent material.

### DETAILED DESCRIPTION OF THE INVENTION

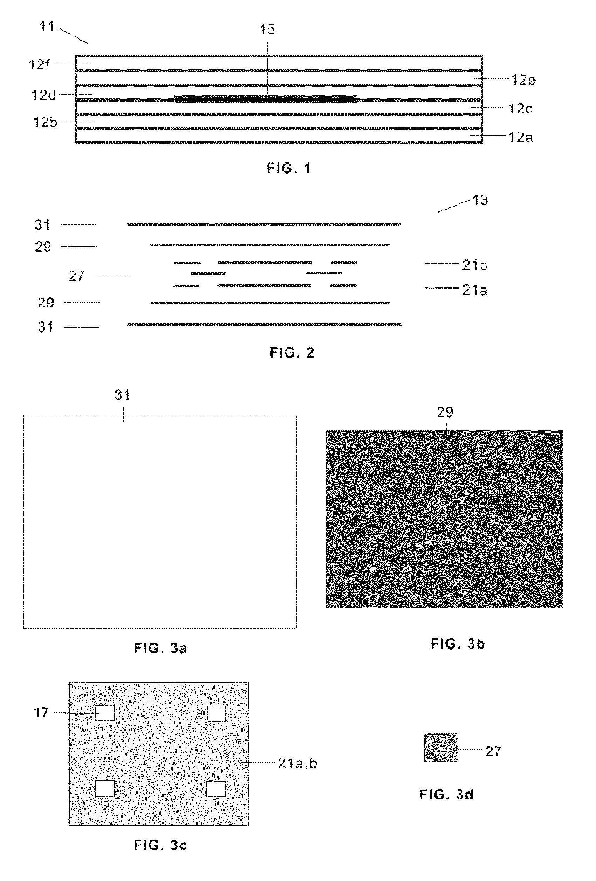

Figure 1 shows an artificially defective laminate 11 comprising several layers 12a, 12b, ..., 12f of a composite material and an insert 15 for simulating a delamination defect placed between the layers 12c and 12d. The location of the insert 15 in the laminate 11 will be defined to suit the defect to be simulated (it can be an internal or a superficial defect).

The insert 15 can adopt any form although most common forms for simulating real defects are squared and circular patterns, with sizes varying to cope with the severity of the defect to be simulated.

Figures 2, 3a to 3c, 4a, 4b show the lay-up 13 used for preparing an insert 15 according to an embodiment, which is not part of the claimed invention, comprising:
- A protective base and a protective cover comprising a paper layer 31 capable of withstanding heat (the carrier paper from the prepreg tapes has shown to be effective) and an anti-adherent layer 29 avoiding that some flowing adhesive can be adhered to the paper layer 31.
- Two rectangular layers of an anti-adherent material 21 a, 21 b such as PFTE with four rectangular holes 17 in their borders having a thickness lesser than the thickness of the layers of a composite material 12a, 12b, ... 12f.
- Four rectangular adhesive film pieces 27 to cover the holes 17. The dimensions of these pieces will be just enough to cover the holes.

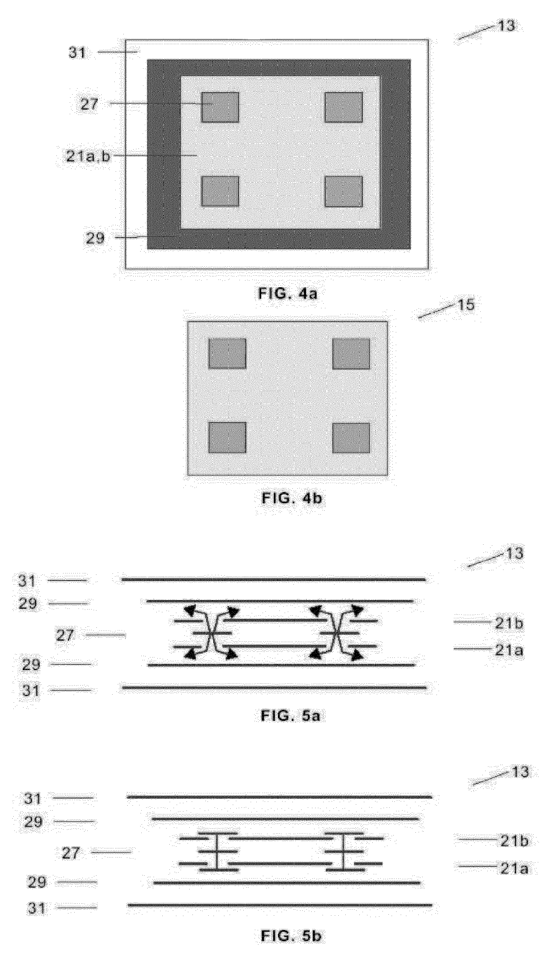

Once the lay-up 13 is prepared over a working surface as illustrated in Figures 2 and 4a (a half lay-up), heat is applied on it so that the adhesive will flow through the holes 17 between the two layers 21 a, 21 b (see Figure 5a) to form a rivet-like adhesive seal (see Figure 5b) so that the two layers of an anti-adherent material 21 a, 21 b can be welded during the curing stage of the laminate 11.

The insert 15 avoids the flow of the resin of the layers of composite material 12a, 12b, ..., 12f between the layers of anti-adherent material 21 a, 21 b during the curing stage of the laminate 11.

The number and dimensions of the holes 17 is selected to allow a welding of the anti-adherent layers 21 a and 21 b. The size shall be such as not to disturb the laminate 11 in an area comparable to the thickness of each composite layer and with sufficient distance between welding points to not influence each other. The size of the holes 17 can be in the order of 1 mm2 and the size of the adhesive film pieces 27 slightly bigger, in the order of 2 mm2.

The adhesive film pieces 27 shall be of a compatible material with the composite material of the layers 12a, 12b, ..., 12f of the laminate 11. For example, for a carbon reinforced thermoplastic material, the material of the adhesive film pieces 27 can be an epoxy adhesive. The adhesive shall be able to reduce its viscosity with the above-mentioned heat application without curing. This allows the flow of the adhesive and a reduced thickness of the adhesive layer in the cured laminate, which does not affect the laminate layers profile.

After the application of heat, the protective base and the protective cover are withdrawn and the insert 15, illustrated in Figure 4b, is ready to be used in the manufacturing process of the artificially defective laminate 11. The insert 15 is placed over the layer 12c of the laminate 11 after having applied heat on it to increase its tacking, ensuring thus that the application of the next layer 12d will not move the insert 15.

In another embodiment, which is not part of the claimed invention, the two layers of an anti-adherent material 21 a, 21 b with four rectangular holes 17 in their borders and the four rectangular adhesive film pieces 27 having a suitable dimension to cover the holes 17 are placed directly over the layer 12c of the laminate 11 so that the lower overflow of the adhesive film pieces 27 reaches the layer 12c, ensuring the fixation of two layers of anti-adherent material 21 a, 21 b to each other and to the layer 12c.

As in the previous embodiment, the insert 15 impedes the flow of resin of the layers of a composite material 12a, 12b, ..., 12f between the layers of anti-adherent material 21 a, 21 b during the curing stage of the laminate 11.

In another embodiment according to the invention, two layers of an anti-adherent material 21 a, 21 b (without adhesive film pieces between them) of a different size are placed directly over the layer 12c after having applied heat on it to increase its tacking.

Among others, the invention has the following advantages:
- The insert 15 is not moved when the next layer of composite material 12d is laid up.
- The two layers of anti-adherent material 21 a, 21 b can be sealed thanks to the addition of adhesives avoiding their separation when the next prepreg layer is laid up.

The artificially defective cured laminate 11 according to the invention can be used as a test specimen for conducting structural tests intended to analyse the influence of the defect caused by the insert 15 in the structural integrity of the laminate 11 as in the prior art. In this respect, non-destructive testing techniques (i.e. ultrasonic inspection) to confirm size and location of the insert 15 before the specimen is tested are well known.

Although the present invention has been described in connection with various embodiments, it will be appreciated from the specification that various combinations of elements, variations or improvements therein may be made, and are within the scope of the claims.

## Claims

1. An artificially defective cured laminate (11) comprising a plurality of layers of a composite material (12a, 12b, ..., 12f) and an insert (15) of an anti-adherent material between two of said layers for simulating a delamination defect, **characterized in that** the insert (15) comprises two layers of anti-adherent material (21 a, 21 b) of different size, being placed the smaller under the bigger, arranged for avoiding that the resin of the layers of a composite material (12a, 12b, ..., 12f) can flow between them during the curing stage of the laminate.

2. An artificially defective cured laminate (11) according to claim 1, wherein the thickness of the layers of the anti-adherent material (21 a, 21 b) is lesser than the thickness of the layers of the composite material (12a, 12b, ..., 12f).

3. An artificially defective cured laminate (11) according to any of claims 1-2, wherein said anti-adherent material is polytetrafluoroethylene (PTFE).

4. A manufacturing method of an artificially defective cured laminate (11) of a composite material including an inner insert of an anti-adherent material for simulating a delamination defect, comprising steps of:
a) laying-up a first group of layers of a composite material (12a, 12b, 12c);
b) applying local heat on the area of the last layer (12c) where said insert (15) will be placed to increase its tacking;
c) placing over the last layer (12c) of the first group, one upon another, a first and a second layer of an anti-adherent material (21 a, 21 b) forming the insert (15), being the first layer (21 a) smaller than the second layer (21 b);
d) laying-up a second group of layers of a composite material (12d, 12e, 12f);
e) curing the laminate resulting from step d).

5. A manufacturing method according to claim 4, wherein the thickness of the layers of an anti-adherent material (21 a, 21 b) is lesser than the thickness of the layers of a composite material (12a, 12b, ..., 12f).

6. A manufacturing method according to any of claims 4-5, wherein said anti-adherent material is polytetrafluoroethylene (PTFE).

7. Use of an artificially defective cured laminate (11) according to any of claims 1-3, as a test specimen for conducting structural tests intended to analyze the influence of the defect caused by said insert (15) in the structural integrity of the laminate.

## Patentansprüche

1. Künstlich fehlerhaftes, gehärtetes Laminat (11), das eine Mehrzahl von Schichten aus einem Verbundmaterial (12a, 12b, ...,12f) und einen Einsatz (15) aus einem Antihaftmaterial zwischen zweien der Schichten zum Simulieren eines Delaminierungsdefektes umfasst, **dadurch gekennzeichnet, dass** der Einsatz (15) zwei Schichten aus Antihaftmaterial (21 a, 21 b) mit unterschiedlicher Größe umfasst, wobei die Kleinere unter der Größeren platziert ist, die eingerichtet sind, um zu vermeiden, dass das Harz der Schichten aus einem Verbundmaterial (12a, 12b, ...,12f) während der Härtungsstufe des Laminats zwischen diese fließen kann.

2. Künstlich fehlerhaftes, gehärtetes Laminat (11) nach Anspruch 1, wobei die Dicke der Schichten des Antihaftmaterials (21 a, 21 b) kleiner als die Dicke der Schichten aus dem Verbundmaterial (12a, 12b, ...,12f) ist.

3. Künstlich fehlerhaftes, gehärtetes Laminat (11) nach einem der Ansprüche 1 bis 2, wobei das Antihaftmaterial Polytetrafluorethylen (PTFE) ist.

4. Herstellungsverfahren eines künstlich fehlerhaften, gehärteten Laminats (11) aus einem Verbundmaterial, das einen inneren Einsatz und ein Antihaftmaterial zum Simulieren eines Delaminierungsdefekts umfasst, mit den Schritten:
a) Auflegen einer ersten Gruppe von Schichten aus einem Verbundmaterial (12a, 12b, 12c);
b) Anwenden lokaler Wärme auf der Fläche der letzten Schicht (12c), wo der Einsatz (15) platziert werden wird, um ihre Klebrigkeit zu erhöhen;
c) Platzieren über der letzten Schicht (12c) der ersten Gruppe, eine über der anderen, einer ersten und einer zweiten Schicht aus einem Antihaftmaterial (21 a, 21 b), die den Einsatz (15) bilden, wobei die erste Schicht (21 a) kleiner als die zweite Schicht (21 b) ist;
d) Auflegen einer zweiten Gruppe von Schichten aus einem Verbundmaterial (12d, 12e, 12f);
e) Härten des aus Schritt d) resultierenden Laminats.

5. Herstellungsverfahren nach Anspruch 4, wobei die Dicke der Schichten aus einem Antihaftmaterial (21 a, 21 b) kleiner als die Dicke der Schicht aus einem Verbundmaterial (12a, 12b, ...,12f) ist.

6. Herstellungsverfahren nach einem der Ansprüche 4-5, wobei das Antifhaftmaterial Polytetrafluorethylen (PTFE) ist.

7. Verwendung eines künstlich fehlerhaften, gehärteten Laminats (11) nach einem der Ansprüche 1-3 als eine Testprobe zum Durchführen von strukturellen Tests, die dazu dienen, den Einfluss des durch den Einsatz (15) hervorgerufenen Defekts auf die strukturelle Unversehrtheit des Laminats zu analysieren.

## Revendications

1. Stratifié durci artificiellement défectueux (11) comprenant une pluralité de couches d'un matériau composite (12a, 12b, ..., 12f) et un insert (15) en un matériau anti-adhérent entre deux desdites couches pour simuler un défaut de délaminage, **caractérisé en ce que** l'insert (15) comprend deux couches de matériau anti-adhérent (21a, 21b) de différente taille, la petite étant placée sous la plus grande, agencées pour éviter que la résine des couches d'un matériau composite (12a, 12b, ..., 12f) puissent couler entre elles pendant l'étape de durcissement du stratifié.

2. Stratifié durci artificiellement défectueux (11) selon la revendication 1, dans lequel l'épaisseur des couches du matériau anti-adhérent (21a, 21b) est inférieure à l'épaisseur des couches du matériau composite (12a, 12b, ..., 12f).

3. Stratifié durci artificiellement défectueux (11) selon l'une quelconque des revendications 1 à 2, dans lequel ledit matériau anti-adhérent est le polytétrafluoroéthylène (PTFE).

4. Procédé de fabrication d'un stratifié durci artificiellement défectueux (11) d'un matériau composite incluant un insert intérieur en un matériau anti-adhérent pour simuler un défaut de délaminage, comprenant les étapes de :
a) superposer un premier groupe de couches d'un matériau composite (12a, 12b, 12c) ;
b) appliquer de la chaleur locale sur la zone de la dernière couche (12c) où ledit insert (15) sera placé pour augmenter son adhérence ;
c) placer au-dessus de la dernière couche (12c) du premier groupe, l'une sur l'autre, une première et une seconde couche d'un matériau anti-adhérent (21a, 21b) formant l'insert (15), la première couche (21a) étant plus petite que la seconde couche (21b) ;
d) superposer un second groupe de couches d'un matériau composite (12d, 12e, 12f) ;
e) durcir le stratifié résultant de l'étape d).

5. Procédé de fabrication selon la revendication 4, dans lequel l'épaisseur des couches d'un matériau anti-adhérent (21a, 21b) est inférieure à l'épaisseur des couches d'un matériau composite (12a, 12b, ..., 12f).

6. Procédé de fabrication selon l'une quelconque des revendications 4 à 5, dans lequel ledit matériau anti-adhérent est le polytétrafluoroéthylène (PTFE).

7. Utilisation d'un stratifié durci artificiellement défectueux (11) selon l'une quelconque des revendications 1 à 3, comme une éprouvette d'essai pour réaliser des essais structurels destinés à analyser l'influence du défaut causé par ledit insert (15) dans l'intégrité structurelle du stratifié.
